# EUROPÄISCHE PATENTSCHRIFT

(11) **EP 1 384 658 B1**
(45) Veröffentlichungstag und Bekanntmachung des Hinweises auf die Patenterteilung: **02.09.2009**
(21) Anmeldenummer: 03014197.2
(22) Anmeldetag: 24.06.2003
(51) Int. Cl.: B62H 5/00

(54) **Zentralverriegelungssystem für Fahrzeuge, insbesondere für Motorräder**
Central locking system for motorbikes
Système de verrouillage central pour motocyclettes

(30) Priorität: 26.07.2002 DE 10234060
(43) Veröffentlichungstag der Anmeldung: 28.01.2004
(73) Patentinhaber: Bayerische Motoren Werke Aktiengesellschaft, 80809 München (DE)
(72) Erfinder: Hinsberg, Rene, 93336 Altmannstein (DE); Roemheld, Martin, 10715 Berlin (DE); Wettach, Christian, 81541 München (DE)

(56) Entgegenhaltungen:
- EP-A2- 0 771 703
- DE-A1- 10 115 314
- DE-A1- 19 648 678
- DE-U1- 20 118 084
- US-A- 4 726 203
- US-A- 4 907 428

## Beschreibung

Die vorliegende Erfindung betrifft ein Zentralverriegelungssystem für Fahrzeuge, insbesondere für Motorräder, gemäß dem Oberbegriff des Patentanspruches 1.

Ein derartiges Zentralverriegelungssystem ist aus der DE 201 18 084 U1 bekannt. Zum technischen Hintergrund gehören ferner die DE 101 15 314 A1 sowie die US 4 907 428.

Aus der DE 196 48 678 A1 ist ein Zentralverriegelungssystem für Motorräder bekannt, mit dem durch verschiedene Hydraulik- und/oder Pneumatikzylinder wichtige Fahrfunktionen wie Lenkung, Elektronik und Antrieb "sperrbar' sind. Dieses "Zentralverrieglungssystem" funktioniert ohne jegliche Elektronik und ist zur aktiven und präventiven Sicherung von Zweirädern geeignet.

Motorräder sind häufig mit verschiedenen Anbaukomponenten, insbesondere Gepäckbehältern, wie zum Beispiel Seitenkoffern oder einem Topcase ausgerüstet. Herkömmliche Motorradkoffer und Topcase weisen üblicherweise ein Schloss und einen Schließzylinder auf. Um die Gefahr eines Diebstahls zu verringern, müssen die Motorradkoffer und gegebenenfalls das Topcase sowie das Motorrad an sich jeweils separat abgeschlossen werden.

Aufgabe der Erfindung ist es, ein Zentralverriegelungssystem für Fahrzeuge, insbesondere für Motorräder zu schaffen, das einen verbesserten Bedienkomfort aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einem Zentralverriegelungssystem für Fahrzeuge, insbesondere für Motorräder, mit dem ganz allgemein gesprochen "Anbaukomponenten" des Fahrzeugs "zentral" über ein Bedienelement absperrbar bzw. öffenbar sind.

Unter dem Begriff "Anbaukomponenten" sind insbesondere Gepäckbehälter wie zum Beispiel Seitenkoffer oder Topcases für Motorräder zu verstehen. Durch Absperren des Motorrads über ein zentrales Bedienelement, zum Beispiel über einen Schlüssel mit Funkfernbedienung, können sowohl das Motorrad an sich als auch die an das Motorrad angebauten Gepäckbehälter abgesperrt werden.

Erfindungsgemäss können über das Zentralverriegelungssystem die Gepäckbehälter an sich verriegelt werden. Das heißt, über das Zentralverriegelungssystem können Deckel bzw. Zugangsöffnungen zu Gepäckbehältern zentral abgesperrt werden.

Bei Gepäckbehältern, die manuell vom Motorrad abnehmbar bzw. demontierbar sind, kann zusätzlich vorgesehen sein, dass durch Betätigen der Zentralverriegelung die "Befestigung" der Gepäckbehälter am Motorrad verriegelbar ist.

Das Zentralverriegelungssystem bietet somit zum einen Schutz vor Diebstahl von Gegenständen aus den Gepäckbehältern und zum anderen Schutz vor Diebstahl der Gepäckbehälter an sich, das heißt Schutz gegen unbefugtes Demontieren der Gepäckbehälter vom Motorrad.

Erfindungsgemäss ist vorgesehen, dass bei Gepäckbehältern, die häufiger vom Motorrad demontiert werden, die Verriegelungseinrichtung des Gepäckbehälters "autark" funktioniert. Hierzu kann vorgesehen sein, dass die Verrieglungseinrichtung des Gepäckbehälters eine separate Spannungsversorgung aufweist. Die Spannungsversorgung kann beispielsweise durch einen in den Gepäckbehälter integrierten Akkumulator oder eine Batterie realisiert sein. Zum Laden des Akkumulators kann zusätzlich eine Solarzelle am Gepäckbehälter angebracht sein.

Zur "Kommunikation" mit dem Zentralverrieglungssystem des Motorrads kann im Gepäckbehälter eine "Empfangseinrichtung", zum Beispiel ein Funkempfänger vorgesehen sein. Zum Öffnen bzw. Abschließen des Gepäckbehälters wird vom Zentralverriegelungssystem, das heißt von einem zugeordneten Sendeelement des Zentralverriegelungssystems ein Öffnungs- bzw. Schließsignal ausgesendet. Der Empfänger des Gepäckbehälters empfängt dieses Öffnungs- bzw. Schließsignal und steuert entsprechend die Verrieglungseinrichtung des Gepäckbehälters an.

Der Sender kann beispielsweise fest am Motorrad installiert sein. Alternativ oder ergänzend dazu kann auch ein tragbarer Sender vorgesehen sein. Ein solcher tragbarer Sender kann beispielsweise in einen Fahrzeugschlüssel integriert sein.

Zusätzlich kann am oder im Gepäckbehälter ein Sender vorgesehen sein, dem ein Empfänger des Zentralverriegelungssystems zugeordnet ist. Durch manuelles Absperren des Gepäckbehälters, z.B. mittels eines herkömmlichen Schlüssels, kann der Sender aktiviert werden. Der Sender sendet dann ein Schließsignal an den Empfänger des Zentralverriegelungssystems. Auf diese Weise kann durch manuelles Abschließen des Gepäckbehälters das Zentralverriegelungssystem betätigt und somit andere "Schließkomponenten" abgeschlossen bzw. aufgeschlossen werden.

Vorzugsweise ist am oder im Gepäckbehälter eine Verriegelungseinrichtung integriert, die elektrisch betätigbar ist. Nach einer Weiterbildung der Erfindung ist die Verriegelungseinrichtung des Gepäckbehälters über eine elektrische Verbindungsleitung mit dem Zentralverriegelungssystem des Motorrads verbunden. Eine derartige "Leitungsverbindung" eignet sich insbesondere für Gepäckbehälter, die nicht oder nur selten vom Motorrad demontiert werden müssen.

Vorzugsweise kann das Zentralverriegelungssystem mit einer Diebstahlwarnanlage und/oder einer elektronischen Wegfahrsperre kombiniert sein. Das heißt, es kann vorgesehen sein, dass bei "widerrechtlichem" Öffnen bzw. Abnehmen eines Gepäckbehälters die "Alarmanlage" aktiviert wird. Ein "widerrechtliches Öffnen liegt vor, wenn sich das Zentralverriegelungssystem in einem Schließzustand befindet und ein Schloss bzw. eine Verriegelung ohne Betätigung des Zentralverriegelungssystems geöffnet wird. Zum Erkennen des widerrechtlichen Öffnens kann an jeder Verriegelungseinrichtung ein "Schließzustandsgeber", z.B. ein herkömmlicher Schalter, vorgesehen sein.

## Patentansprüche

1. Zentralverriegelungssystem für Motorräder, wobei am Motorrad ein Gepäckbehälter anbringbar ist, der eine absperrbare Verriegelungseinrichtung aufweist, die durch Betätigen des Zentralverriegelungssystems absperrbar und öffenbar ist,
**dadurch gekennzeichnet, dass** am oder im Gepäckbehälter eine Spannungsversorgungseinrichtung vorgesehen ist, die zur Versorgung der Verriegelungseinrichtung mit elektrischer Spannung vorgesehen ist.

2. Zentralverriegelungssystem nach Anspruch 1, wobei die Verriegelungseinrichtung zum Absperren einer Zugangsöffnung bzw. eines Deckels des Gepäckbehälters vorgesehen ist.

3. Zentralverriegelungssystem nach Anspruch 1 oder 2, wobei der Gepäckbehälter abnehmbar am Motorrad befestigt ist und die Verriegelungseinrichtung zum Festsperren des Gepäckbehälters am Motorrad vorgesehen ist.

4. Zentralverriegelungssystem nach einem der Ansprüche 1 bis 3, wobei die Verriegelungseinrichtung über eine elektrische Verbindungsleitung mit dem Zentralverriegelungssystem des Motorrads verbunden ist.

5. Zentralverriegelungssystem nach einem der Ansprüche 1 bis 4, wobei die Spannungsversorgungseinrichtung durch einen Akkumulator gebildet ist.

6. Zentralverriegelungssystem nach Anspruch 5, wobei am Gepäckbehälter eine Solarzelleneinrichtung angeordnet ist, die an den Akkumulator angeschlossen ist und zum Aufladen des Akkumulators vorgesehen ist.

7. Zentralverriegelungssystem nach einem der Ansprüche 1 bis 6, wobei am oder im Gepäckbehälter ein elektrischer Empfänger angeordnet ist, der zum Empfang von Öffnungs-/Schließsignalen des Zentralverriegelungssystems und zum Ansteuern der Verriegelungseinrichtung vorgesehen ist.

8. Zentralverriegelungssystem nach einem der Ansprüche 1 bis 7, wobei der Gepäckbehälter ein Seitenkoffer ist, der seitlich am Motorrad im Bereich des Hinterrades befestigt ist.

9. Zentralverriegelungssystem nach einem der Ansprüche 1 bis 7, wobei der Gepäckbehälter ein am Motorradheck befestigtes Topcase ist.

10. Zentralverriegelungssystem nach einem der Ansprüche 1 bis 9, wobei das Zentralverriegelungssystem über ein zentrales Bedienelement betätigbar ist.

11. Zentralverriegelungssystem nach einem der Ansprüche 1 bis 10, wobei des Zentralverriegelungssystem ferngesteuert ansteuerbar ist.

12. Zentralverriegelungssystem nach Anspruch 11, wobei das Zentralverriegelungssystem mittels eines tragbaren Senders ansteuerbar ist.

13. Zentralverriegelungssystem nach Anspruch 12, wobei der Sender in einen Fahrzeugschlüssel integriert ist.

14. Zentralverriegelungssystem nach einem der Ansprüche 1 bis 13, wobei das Zentralverriegelungssystem elektrisch mit einer Diebstahlwarnanlage verbunden ist und ein Warnsignal erzeugt, wenn der Gepäckbehälter anderweitig als durch Entriegeln der Verriegelungseinrichtung über das Zentralverriegelungssystem geöffnet bzw. demontiert wird.

## Claims

1. A central locking system for motorcycles, wherein a luggage holder can be attached to the motorcycle and has a lockable locking device, which can be locked and opened by actuating the central locking system,
**characterised in that** a voltage supply device is provided on or in the luggage holder and is provided with electric voltage to supply the locking device.

2. A central locking system according to claim 1, wherein the looking device is provided to lock an access opening or a lid of the luggage holder.

3. A central locking system according to claim 1 or claim 2, wherein the luggage holder is removably fastened to the motorcycle and the locking device is provided to securely lock the luggage holder on the motorcycle.

4. A central locking system according to any one of claims 1 to 3, wherein the locking device is connected by means of an electric connection line to the central locking system of the motorcycle.

5. A central locking system according to any one of claims 1 to 4, wherein the voltage supply device is formed by an accumulator.

6. A central locking system according to claim 5, wherein a solar cell device, which is connected to the accumulator and is provided to charge the accumulator, is arranged on the luggage holder.

7. A central locking system according to any one of claims 1 to 6, wherein an electric receiver, which is provided to receive opening/closing signals of the central locking system and to activate the looking device, is arranged on or in the luggage holder.

8. A central locking system according to any one of claims 1 to 7, wherein the luggage holder is a side case, which is fastened laterally to the motorcycle in the region of the rear wheel.

9. A central locking system according to any one of claims 1 to 7, wherein the luggage holder is a top case fastened to the motorcycle rear.

10. A central locking system according to any one of claims 1 to 9, wherein the central locking system can be actuated by a central operating element.

11. A central locking system according to any one of claims 1 to 10, wherein the central locking system can be activated by remote control.

12. A central locking system according to claim 11, wherein the central locking system can be activated by means of a portable transmitter.

13. A central locking system according to claim 12, wherein the transmitter is integrated in a vehicle key.

14. A central locking system according to any one of claims that 1 to 13, wherein the central locking system is electrically connected to a theft alarm system and produces an alarm signal when the luggage holder is a opened or disassembled other than by unlocking the locking device by means of the central locking system.

## Revendications

1. Système de verrouillage centralisé pour un motocycle (moto), selon lequel la moto comporte un casier à bagages ayant une installation de verrouillage susceptible d'être fermée, se fermant et s'ouvrant par l'actionnement du système de verrouillage centralisé,
**caractérisé par**
une installation d'alimentation en tension dans ou sur le casier à bagages, et servant à alimenter en tension électrique l'installation de verrouillage.

2. Système de verrouillage centralisé selon la revendication 1,
selon lequel
l'installation de verrouillage ferme un orifice d'accès ou un couvercle du casier à bagages.

3. Système de verrouillage centralisé selon la revendication 1 ou 2,
selon lequel
le casier à bagages est fixé de manière amovible à la moto et l'installation de verrouillage est prévue pour verrouiller solidairement le casier à bagages à la moto.

4. Système de verrouillage centralisé selon l'une des revendications 1 à 3,
selon lequel
l'installation de verrouillage est reliée au système de verrouillage centralisé de la moto par une ligne de liaison électrique.

5. Système de verrouillage centralisé selon l'une des revendications 1 à 4,
selon lequel
l'installation d'alimentation en tension est constituée par un accumulateur.

6. Système de verrouillage centralisé selon la revendication 5,
selon lequel
le casier à bagages est équipé d'une installation à cellules photovoltaïques reliée à l'accumulateur et servant à charger l'accumulateur.

7. Système de verrouillage centralisé selon l'une des revendications 1 à 6,
selon lequel
un récepteur électrique est prévu sur ou dans le casier à bagages pour recevoir des signaux d'ouverture/fermeture venant du système de verrouillage centralisé et servant à commander l'installation de verrouillage.

8. Système de verrouillage centralisé selon l'une des revendications 1 à 7,
selon lequel
le casier à bagages est un coffre latéral fixé sur le côté de la moto au niveau de sa roue arrière.

9. Système de verrouillage centralisé selon l'une des revendications 1 à 7,
selon lequel
le casier à bagages est un « top-case » fixé à l'arrière de la moto.

10. Système de verrouillage centralisé selon l'une des revendications 1 à 9,
selon lequel
le système de verrouillage centralisé est actionné par un élément de commande centrale.

11. Système de verrouillage centralisé selon l'une des revendications 1 à 10,
selon lequel
le système de verrouillage centralisé est télécommandé.

12. Système de verrouillage centralisé selon la revendication 11,
selon lequel
le système de verrouillage centralisé est commandé par un émetteur portatif.

13. Système de verrouillage centralisé selon la revendication 12,
selon lequel
l'émetteur est intégré dans la clé de contact du véhicule.

14. Système de verrouillage centralisé selon l'une des revendications 1 à 13,
selon lequel
le système de verrouillage centralisé relié électriquement à une installation antivol génère un signal avertisseur si le casier à bagages est ouvert ou démonté autrement que par le déverrouillage de l'installation de verrouillage par l'intermédiaire du système de verrouillage centralisé.
